(19) Europäisches Patentamt

European Patent Office

Office européen des brevets

(11) **EP 1 470 660 B1**

(12) **EUROPEAN PATENT SPECIFICATION**

(45) Date of publication and mention
of the grant of the patent:
**23.08.2006 Bulletin 2006/34**

(51) Int Cl.:
*H04L 9/00* (2006.01)     *H04L 29/06* (2006.01)

(21) Application number: **03707616.3**

(22) Date of filing: **29.01.2003**

(86) International application number:
**PCT/US2003/002807**

(87) International publication number:
**WO 2003/067808 (14.08.2003 Gazette 2003/33)**

(54) **METHOD AND SYSTEM FOR SECURELY STORING AND TRANSMITTING DATA BY APPLYING A ONE-TIME PAD**

VERFAHREN UND UND SYSTEM ZUM SICHEREN SPEICHERN UND ÜBERTRAGEN VON DATEN BEI DER BENUTZUNG EINES ONE-TIME PADS

PROCEDE ET SYSTEME DE STOCKAGE ET DE TRANSMISSION DE DONNEES SECURISES PAR APPLICATION D'UN ONE-TIME PAD

(84) Designated Contracting States:
**AT BE BG CH CY CZ DE DK EE ES FI FR GB GR HU IE IT LI LU MC NL PT SE SI SK TR**

(30) Priority: **01.02.2002 US 61901**

(43) Date of publication of application:
**27.10.2004 Bulletin 2004/44**

(73) Proprietor: **Cisco Technology, Inc.**
**San Jose, CA 95134-1706 (US)**

(72) Inventor: **GLEICHAUF, Paul**
**Saratoga, CA 95070 (US)**

(74) Representative: **Kazi, Ilya et al**
**Mathys & Squire**
**120 Holborn**
**London EC1N 2SQ (GB)**

(56) References cited:
WO-A-01/99387          US-A1- 2003 002 675
US-B1- 6 199 165       US-B1- 6 205 488

- **STALLINGS W: "Cryptography and Network Security, Principles and Practice, 2nd Edition" 1999 , PRENTICE HALL , UPPER SADDLE RIVER, NEW JERSEY 07458 XP002240900 page 38 -page 41**
- **JAMOUSSI B ET AL: "Constraint-Based LSP Setup using LDP" INTERNET ENGINEERING TASK FORCE (IETF), [Online] 1 January 2002 (2002-01-01), XP002241751 Retrieved from the Internet: <URL:ftp://ftp.rfc-editor.org/in-notes/pdf rfc/rfc3212.txt.pdf> [retrieved on 2003-05-20]**
- **"DARPA Internet Program Protocol Specification" INTERNET ENGINEERING TASK FORCE (IETF), [Online] 1 September 1981 (1981-09-01), XP002241752 Retrieved from the Internet: <URL:ftp://ftp.rfc-editor.org/in-notes/pdf rfc/rfc791.txt.pdf> [retrieved on 2003-05-20]**

**Description**

The present invention generally relates to secured communications. The invention relates more specifically to a method and system for storage and transmission of data by applying a one-time pad.

BACKGROUND OF INVENTION

Security in data transmission and storage has become increasingly important as people become more reliant on computer-based communications. Such transactions often involve the transmission of confidential corporate or personal data through a computer network system, between clients or between servers and clients.

In a typical network system, such as a Metropolitan Area Network (MAN) or the Wide Area Network (WAN), multiple users have access to and communicate over a shared communication network. Many computer applications require transmission of confidential or sensitive data over these shared networks, and such applications must regard the networks as public unless great care is taken to protect them.

There is an increasing concern about security in data storage, where data may be misappropriated or altered by unauthorized users who have obtained access. Databases and content delivery are examples of application domains in which concerns regarding protection of storage arise. Databases need protection from disaster through backups and recovery, and need to migrate in whole or in part as part of a caching solution for latency. Further, providing distribution of the database storage including transactions may be required. In content delivery, in general, a service provider wants to market rich data sets, such as multimedia, to a customer without risk of interception or copying by others who have not paid for the service.

Shared storage infrastructures in which stored data is collocated with other users' data, such as Storage Area Networks (SANs) and Network Attached Storage, are vulnerable to outside attacks. A SAN is a high-speed network, comparable to a LAN, which allows the establishment of direct block oriented connections between storage devices and processors (servers) centralized to the extent supported by network media (such as fibre channels or iSCSI). NAS is a form of LAN attached file server that serves files using a network protocol such as Unix Network File System (NFS), Windows Common Internet File Service (CFS), Apple Inc.'s Apple Filing Protocol (AFP), Novell Inc.'s NetWare Core Protocol (NCP) or, for the Web, Hypertext Transfer Protocol.

Data stored in shared infrastructures, such as SANs or NAS, must be protected from several threats, including:

1) An accidental or malicious mis-configuration, which can result from either an attempt at legitimate management or an attacker impersonating a qualified systems administrator. Network management tools are complicated and poorly integrated, and storage management tools are independent of network tools and require separate expertise. The coupling of these two tasks pose an increased risk of mistakes, such that users or administrators may be able to gain access to another's data.
2) Snooping of traffic during transport into and out of the data center, which can occur anywhere between the data center and customer location.
3) Impersonation of another user such that their storage is accessible. The mimicry may result from a hack attack on authentication mechanisms into the shared storage infrastructure, through an existing account that an attacker created explicitly for an attack, or through a hack into the remote server sites that access the shared storage.
4) Impersonation of administrators, such that storage and also complete control of the storage devices and the network become available to the attacker.

Techniques used in the past to store confidential data are tight access control through password protection and cryptographic methods. In one past approach, password protection is used to protect information from unauthorized access and to ensure reliable delivery. A password, or a uniquely defined identifier, is written into the storage media, and a user attempting to access the contents is required to enter the correct password. However, this method is susceptible to theft and illegal use of the password. Further, if the data and a program for its retrieval are packaged in the same medium, the data will be exposed to more serious risks and threats. Therefore, there has been a long demand for more reliable security systems to protect information in storage media from unauthorized access and to ensure safe transmission.

Historically, messages have also been protected by cryptography, in which information is sent in a secure form in such a way that the only person able to retrieve this information is the intended recipient. Commonly, a message being sent is known as plaintext, which is then coded using a cryptographic algorithm, by a process is called encryption. An encrypted message is known as ciphertext, and is converted back into plaintext by the process of decryption. The actual mathematical function used to encrypt and decrypt messages is a cryptographic algorithm or cipher.

Only the intended recipient of the confidential data should possess the randomly generated key necessary to decode the ciphertext into the plaintext message. Therefore, the encrypted ciphertext may be freely transmitted over insecure public communication networks, while remaining undecipherable to anyone but the intended recipient.

However, these methods have limitations. For example, the security of the data depends on the possession of the key by the intended recipient and the vulnerability of the algorithm to being broken by an outside third party. Due to rapid advancements in computer technology, an algorithm once regarded as "unbreakable" may become vulnerable to brute-force attacks. For example, the Data Encryption Standard (DES) algorithm with a 56-bit key was believed to be unbreakable at the time of its inception in 1976. By 1993, DES with a 56-bit key could theoretically broken in less than 8 hours using brute force with a highly sophisticated computer. Therefore, the key was lengthened to 128 bits. The increased key length proved to reduce vulnerability to attacks.

SANs and other shared storage systems expose the weakness of current encryption technologies because they move data with uncertain security requirements but tight latency constraints. For example, if a single key is used to encrypt a large number of data blocks then this approach is vulnerable to text attacks that look for patterns in trying to detect the key. It is then possible to look at the ciphertext streams and break the code if one sees enough traffic. Other schemes that change keys often do so at high cost.

Further, many cryptographic techniques reuse keys that are shorter than the data set. For large data sets, changing keys after the transport of some number of bits is essential to maintain security. A large data set implies that a malicious attacker will have the advantage of a larger amount of data to which to apply code-breaking tools. In this case, determining how often to distribute new keys is difficult. Key distribution frequencies are based upon estimates of the growth in computational capability, the length of time that the data owner estimates it is necessary to keep the data protected, and assumptions about the security of the encryption algorithm used. A long trusted encryption algorithm might be subject to a new decryption method that requires far fewer resources. The desired protection time can be difficult to determine. Thus, there is a need in this field for a method that provides strong data protection without the cost or unreliability of high key distribution frequencies.

All the cryptographic methods employed above rely on mathematical algorithms and keys. The data is only as secure as the algorithm applied. Further, as computer technology becomes more powerful and efficient, an algorithm currently thought to be unbreakable becomes subject to future brute-force attacks. As a result, data encrypted using these methods are subject to compromise.

There is only one unconditionally secure algorithm that is theoretically impenetrable by a brute-force attack: the one-time pad. Unlike all other algorithms, it cannot be broken given infinite time and resources.

The one-time pad is a non-repeating random string of characters, symbols or letters. Each letter on the pad is used only once to encrypt one corresponding plaintext character. There is one copy of the pad at the transmitter and one at the receiver. After use, the pad is never re-used. There is no potentially breakable mathematical algorithm, and as long as the pad remains secure, so does the message. One-time pads have been used, in past approaches, to encrypt diplomatic communications and the like; the key challenge in their use is how to distribute new pads to counter-parties when existing pads are exhausted.

In a computer-automated one-time pad system, the message and pad are encoded in binary. To encrypt the message each bit in the plaintext is combined with a bit in the randomly generated pad in sequence using a bitwise Boolean exclusive-or transformation (abbreviated XOR). The operation is performed on each bit in sequence, i.e. the first bit of the plaintext is XORed with the first bit of the pad to produce the first bit of the ciphertext, the second bit of the plaintext is XORed with the second bit of the pad to produce the second bit of the ciphertext and so on. This process is defined as the Vernam cipher.

Since the keystream used for encoding is randomly generated, it cannot be guessed or derived using a mathematical algorithm, or by statistical analysis. Further, the resulting ciphertext appears purely random and resists traditional statistical and mathematical attacks. In order to determine the keystream by guessing based on the ciphertext, the entire keystream used for encoding must be guessed, which is effectively guessing at the message itself. In addition, discovery of a previous key used to encode an earlier message is useless in decoding future messages, as later messages are encoded using a newly generated random keystream sequence. Such a cipher is said to offer perfect secrecy, and for this reason it has been utilized during wartime over diplomatic channels requiring exceptionally high security.

However, a limitation of the one-time pad is that the length of the key sequence must be the same length of the message. This limitation may be acceptable for short messages, but it is impractical for a high-bandwidth communications channel. Further, the protection of the data is only as secure as the physical protection of the randomly generated keystream on both the sending and receiving ends.

Thus, while an important advantage of the one-time-pad is that there is no key to crack, the difficulty has always been in sharing the pad. There are two reasons this has been difficult: size of the pad and predictability. In past approaches, the size of the key or keystream has been equal to the size of the data set, making distribution of the pad or keystream cumbersome at best. The keystream can be reduced in size and repeated to result in sufficient keystream to encrypt a text, but this exposes the ciphertext to certain kinds of statistical and dictionary attacks.

The second difficulty has been that the keystream must be totally random so two sides cannot share some seed and predict the next bit; if they can, the ciphertext becomes crackable. Sending the key in parallel with the ciphertext, so that an attacker can eavesdrop both streams, does not achieve any security advantage since the attacker can recover the stream as easily as the end point. Shifting the transfer in time doesn't help much either since the attacker can simply wait. US6,199,165B1 discloses a system which recognizes data as being secure or general, and transmits the two on separate channels. 'Cryptography and Network Security' (Stallings W), 1999, page 38-41 discloses the use of a one-time pad and keystream in the art of encryption.

Based on the foregoing, there is a clear need for a method for efficiently and securely storing and transmitting data through insecure network communication channels, and which is capable of being utilized for larger communication channels without decreasing network capacity requirements.

SUMMARY OF THE INVENTION

The foregoing needs, and other needs and objects that will become apparent for the following description, are achieved in the present invention, which comprises a method of securely storing data by applying a one-time pad as set out in claim 1.

An approach for securely transmitting and storing data is hereafter described. A sending host generates a truly random sequence of characters as a keystream that may serve as a one-time pad. The keystream is bitwise combined with plaintext using an exclusive-OR operation to result in creating ciphertext. The keystream and ciphertext are routed over physically separate communication paths to a receiving host. The receiving host decrypts the ciphertext by applying the keystream to the ciphertext using bitwise exclusive-OR. The separately routed paths may be established using MPLS labeling, static or strict route options. The keystream may be pre-computed and sent to the receiving host asynchronously for caching at the receiving host; the receiving host may then replace cached keystream with recovered plaintext as the ciphertext is decrypted, thereby achieving savings in storage. Security of the system ties in the truly random nature of the keystream and the use of physically separate routing paths for keystream and ciphertext.

In one specific approach, a first data stream comprising a generated keystream based on a one-time pad is received. A second data stream comprising ciphertext is also received, wherein first and second data streams are received on two physically separate communication channels. The ciphertext is decrypted using said equal length keystream, resulting in creating and storing decrypted data that is equivalent to the source text.

One feature of this aspect is the decryption of ciphertext comprises performing a Boolean exclusive-OR function bitwise on the ciphertext and keystream to obtain the decrypted plaintext data. According to another feature, the storage of decrypted data comprises overwriting the used keystream with said decrypted plaintext data.

According to another aspect, a first data stream comprising a keystream generated based on a one-time pad is received. A second data stream comprising ciphertext is received, wherein first and second data streams are received on two physically separate communication channels. The data stream is stored in a first shared storage infrastructure and the keystream is stored in a second shared storage infrastructure for later decryption.

According to another aspect, a keystream is randomly generated based on a one-time pad. Plaintext data is encrypted into ciphertext using a keystream having a length equal to a length of a source text. A Boolean exclusive-OR function is performed bitwise on the source text and keystream to obtain the ciphertext.

One feature of this aspect is plaintext data converted into source text composed of a plurality of binary digits. A keystream of length equal to the source text is generated using a true random number generator. A Boolean exclusive-OR function is performed bitwise on the source text and keystream to obtain the ciphertext.

The plaintext data is encrypted into ciphertext using a keystream having a length equal to length of the source text. The ciphertext and keystream are transmitted on two physically separate network paths. The ciphertext is decrypted using an equal length keystream, resulting in creating decrypted data that is equivalent to the source text.

In other aspects, the invention encompasses a computer system as set forth in claim 13 and a computer readable medium carrying a program for effecting the method claimed in claim 1.

BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a block diagram illustrating a system for securely transmitting and storing data by applying a one-time pad;

FIG. 2 is a flow diagram illustrating a method of securely transmitting and storing data by applying a one-time pad;

FIG. 3 is a flow diagram illustrating a method of decrypting data;

FIG. 4 is a flow diagram illustrating a method of securely transmitting and storing data in which keystream is pre-computed and cached;

FIG. 5 is a flow diagram illustrating a method of separately routing keystream and ciphertext; and

FIG. 6 is a block diagram of a computer system with which an embodiment may be implemented.

DETAILED DESCRIPTION OF THE PREFERRED EMBODIMENT

A method for securely storing and transmitting data by applying a one-time pad is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

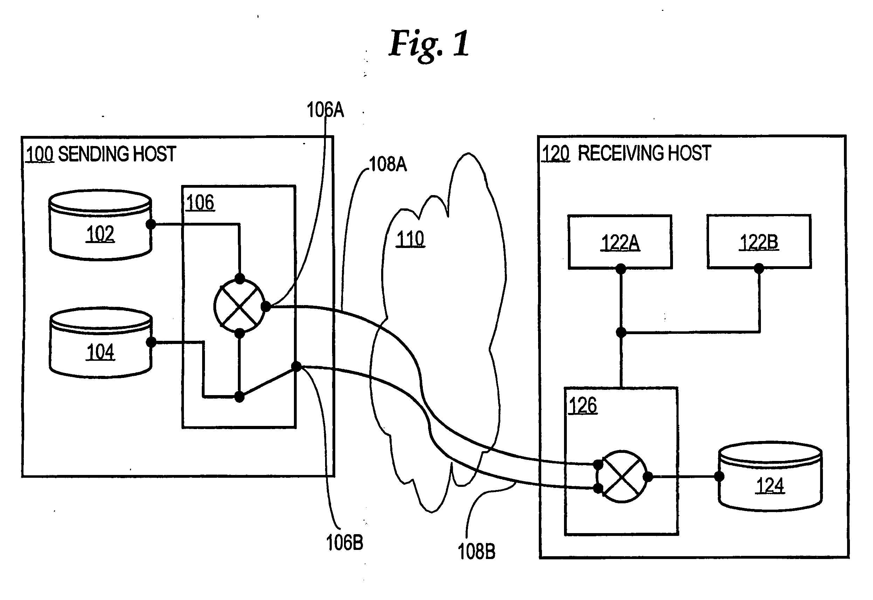

FIG. 1 is a block diagram of an example data network context in which an embodiment may be used. In general, FIG. 1 illustrates a sending host 100, network 110, and receiving host 120. Each host 100,120 may comprise a network infrastructure node such as a router, switch, gateway, or other processing element; alternatively, hosts 100, 120 may be end station devices such as personal computers, workstations, servers, or any other suitable processing device. Network 110 is non-secure, and may comprise one or more local area networks, wide area networks, metropolitan area networks, storage networks, internetworks, or a combination of the foregoing.

Sending host 100 comprises plaintext data 102 and one-time pad data 104 that are communicatively coupled to an encryption engine 106. The encryption engine 106 has a ciphertext output 106A and a keystream output 106B. In this arrangement, encryption engine 106 can receive a continuous first data stream of plaintext data 102 and a continuous second data stream of one-time pad data 104, combine the plaintext data and one-time pad data in an XOR operation, and present the resulting ciphertext on ciphertext output 106A. Encryption engine 106 also outputs the one-time pad data, unmodified, on keystream output 106B.

Sending host 100 is communicatively coupled through network 110 to receiving host 120 on first and second separately routed data paths 108A, 108B. First data path 108A carries ciphertext from output 106A of sending host 100, and second data path 108B carries a one-time pad key stream from output 106B of the sending host. Establishment of data paths 108A, 108B in network 110 is described further herein.

Receiving host 120 comprises a decryption engine 126, plaintext data 124, and one or more shared storage infrastructure elements 122A, 122B. The storage infrastructure elements comprise one or more mass storage devices and associated gateways or controllers. For example, EMC disk storage arrays may be used. Decryption engine 126 receives ciphertext from data path 108A and the one-time pad key stream from data path 108B. In this arrangement, decryption engine 126 can combine the ciphertext and the one-time pad key stream, then perform an XOR operation, yielding plaintext data 124 as a result.

Decryption engine 126 also can provide a copy of the plaintext data 124 to one or more shared storage infrastructure elements 122A, 122B. The storage elements may participate in one or more storage area networks, or may comprise network attached storage elements. When shared storage infrastructure elements 122A, 122B participate in a SAN or as NAS architectures, such architectures conventionally provide separate networks for communication of data to and from storage and for data management functions. These two networks can be used to separate key and data streams for secure protection of data even within the storage network. The storage elements may store plaintext or ciphertext for use or processing at receiving host 120 depending upon the relative security requirements for the storage of data within the storage network. In this arrangement, secure storage and transmission of data may be provided by applying a one-time pad.

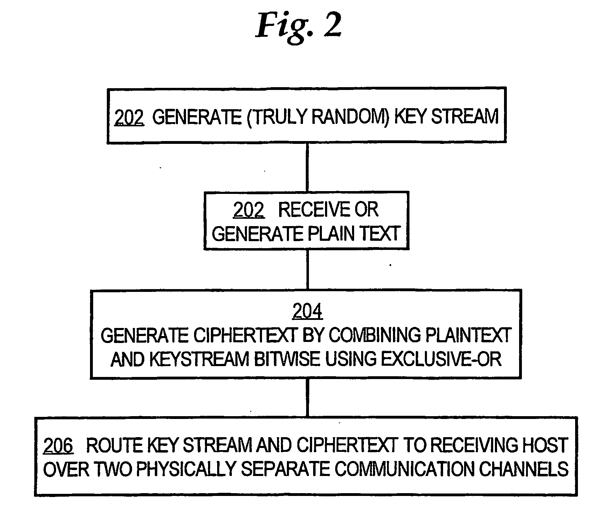

FIG. 2 is a flow diagram illustrating a method of securely transmitting and storing data by applying a one-time pad. In block 202, a key stream is generated. For example, sending host 100 internally generates a key stream using an automatic process, or retrieves keystream data from one-time pad data 104. To enhance security of the system, the generated key stream data should be truly random rather than pseudorandom or non-random. Indeed, with a truly random key stream the system may approach a state of theoretically perfect security.

An event sequence can be said to be truly random if it is impossible to predict the next event in the sequence even if the entire state of the generating process up to that point is known. Random data for the pad may be gathered by hardware accessing processes of a truly non-deterministic nature. Radioactive decay and electronic tunneling in electronic components are both non-detenninistic phenomena produced by events occurring at the quantum subatomic leveL By gathering and processing the output from Geiger counters or Zener diodes, it is possible to obtain truly random data for the pad. Further background information on available methods for true random number generation is provided in O. Goldreich, "Modern Cryptography, Probabilistic Proofs and Pseudorandomness" (Berlin: Springer-Verlag, 1999).

Alternative algorithms can exchange shorter keys that are used to generate a pseudo-random stream of bits to encrypt and decrypt data. In these approaches the entropy of the keystream is less than the method presented here, keys have to be periodically renewed with new ones, and the computation of the key schedule is subject to review based on the evolution of computer capabilities, and the estimate of the entropy produced by the key generator.

In block 203, plain text is received or generated. The plain text may comprise user input entered at sending host 100, data that is retrieved from a storage device associated with sending host 100, data that is automatically generated by programmatic processes executed at sending host 100, etc.

In block 204, ciphertext is generated by combining the plaintext and the keystream bitwise using an exclusive-OR function. Block 204 may be carried out by encryption engine 106 of FIG. 1. Expressed in mathematical terms, Data stream D of length L is combined with a random keystream K, also of length L, bit-by-bit using the XOR function ($\oplus$) to produce an encrypted data stream E:

$$\|E\| = \|K\| = \|D\| = L,$$
$$E = D \oplus K$$

In block 206, the keystream and ciphertext are routed to a receiving host over two physically separate communication channels. For example, as shown in FIG. 1, plaintext data 102 is routed from first output 106A of encryption engine 106 over communication channel 108A to receiving host 120, and one-time pad data 104 is routed from output 106B of encryption engine 106 over channel 108B to the receiving host. Methods for establishing separately routed paths are described further herein in paragraphs below.

Thus, in one embodiment, a receiving host receives a first data stream comprising a randomly generated keystream and a second data stream comprising encrypted data, or ciphertext. Two physically separate communication channels are routed through the network from sending host to receiving host to convey the encrypted data and key.

The decryption process at the endpoint generally involves the converse application of XOR to E to produce D:

$$D = E \oplus K$$

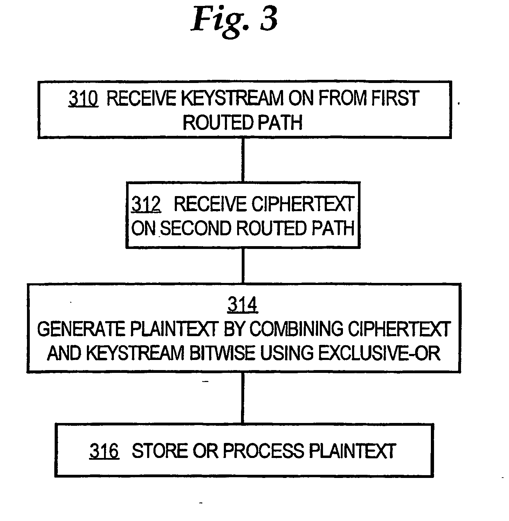

FIG. 3 is a flow diagram of a method of decrypting data. In block 210, keystream data is received from the first routed path. For example, in the arrangement of FIG. 1, decryption engine 126 of receiving host 120 receives keystream data on channel 108B.

In block 212, ciphertext is received on a second routed path. Referring again to FIG. 1, decryption engine 126 of receiving host 120 receives ciphertext on channel 108A.

In block 214, plaintext is generated by combining the received ciphertext and keystream bitwise using an exclusive-OR operation. The resulting plaintext data 124 may be immediately processed by receiving host 120 in any appropriate manner or may be stored. In another embodiment, the data stream and keystream are received on two physically separate network paths at the receiving host and stored in first and second shared storage infrastructures for later decryption. For example, data from channel 108A may be stored in storage infrastructure element 122A and keystream from channel 108B may be stored in storage infrastructure element 122B.

In another embodiment, the plaintext is converted into source text composed of a plurality of binary digits. A random keystream is generated at the sending host. The keystream is generated using a true random number generator. The plaintext data is encrypted into ciphertext using a keystream segment having a length equal to a length of the source text. Two physically separate communication channels are routed through the network to transmit the randomly generated keystream segment and data stream the ciphertext.

In this embodiment, source text the ciphertext is decrypted using the equal length keystream, resulting in creating decrypted data that is equivalent to the source text.

As described above in connection with FIG. 2, block 206, the keystream and ciphertext are routed through two separate paths from sending host to receiving host. In one embodiment, the keystream and ciphertext are kept completely separate from one another throughout their traversal from sending host to receiving host. Where the receiving host is an element of a data center and the sending host is outside the data center, the keystream and ciphertext are kept entirely separate both outside of and inside the data center. If the keystream and ciphertext are sent on paths that overlap entirely or in any part, a malicious listener could apply the key stream to the data stream without discovery by the sending party or receiving party that an interception has occurred. While the randomness of the keystream and ciphertext decreases the likelihood of attack, because it is difficult to get the correct alignment of the two streams, and to associate one with the other among all other data traffic, maintaining separate paths nevertheless increases security.

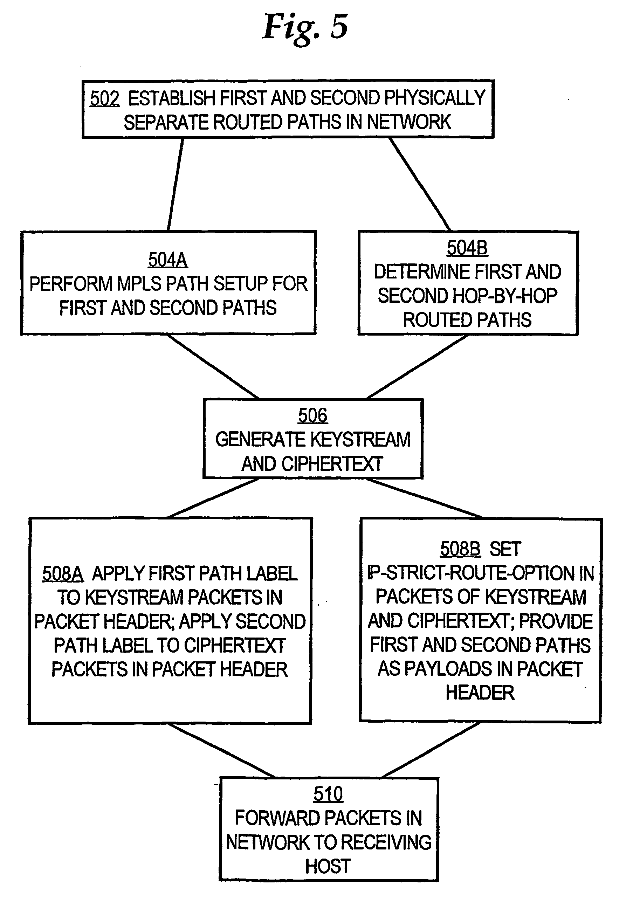

FIG. 5 is a flow diagram illustrating a method of separately routing keystream and ciphertext. In block 502, first and second physically separate routed paths are established in a network between a sending host and receiving host. The separation of paths preferably involves separation at a physical network layer one, and does not merely involve establishing a virtual tunnel, for example. Such physical layer separation can be accomplished, for example, using multi-protocol label switching (MPLS), or by source routing under version 6 of Internet Protocol ("IPv6"). In principle, the paths could be virtually distinct (i.e., through the use of two virtual private network ("VPN") tunnels that are effectively encrypted paths that use conventional key exchange and renewal algorithms). This weakens the security of the system by making it dependent upon the strength of the cryptography used in creation and maintenance of the tunnels.

In an MPLS network, incoming packets are assigned a "label" by a ''label edge router" (LER). Packets are forwarded along a "label switched path (LSP)" where each "label switch router (LSR)" makes forwarding decisions based solely on the contents of the label. For example, the LSR examines the label of an incoming packet, looks up the label in a mapping of labels to egress interface identifiers, and forwards the packet on the interface identified in the mapping, without making conventional hop-by-hop forwarding decisions. At each hop, the LSR also strips off the existing label and applies a new label, obtained from the mapping, which tells the next hop how to forward the packet.

Label switch paths are established by network operators for a variety of purposes, such as to guarantee a certain level of performance, to route around network congestion, or to create IP tunnels for network-based virtual private networks.

As shown by block 504A, MPLS path setup is performed for first and second paths associated with keystream and ciphertext, respectively. In an embodiment as described here, before the processes of FIG. 2 and FIG. 3 are carried out, a network operator establishes a first MPLS path in the network for the keystream, and a second MPLS path for the ciphertext, using appropriate router commands or configuration tools. The path setup process also defines labels that identify keystream packets and ciphertext packets. In block 506, keystream and ciphertext are generated as in the process of FIG. 2. Thereafter, the keystream and data stream are transmitted across physically separate network paths by labeling the keystream with one MPLS label and labeling the data stream with a second MPLS label, as indicated by block 508A and block 510.

Alternatively, in block 504A, first and second routed paths are determined. Under Ipv6, the keystream and data stream are transmitted across physically separate paths by declaring a first path for the keystream and second path for the data stream. A network operator determines the first path and the second path before the processes of FIG. 2 and FIG. 3 are carried out. Each packet of the keystream includes an IP-STRICT-ROUTE-OPTION flag value, and includes the first path as a payload value, as indicated by FIG. 508B. Similarly, packets of the ciphertext declare a strict route equal to the second path, as also indicated in block 508B. The packets are then forwarded as in block 510. As the packets arrive at network nodes, the IP-STRICT-ROUTE-OPTION value essentially instructs intermediate network nodes to forward the keystream packets along the path defined in the payload.

In one alternative embodiment, the initial data stream of plaintext is compressed to remove redundant bits, resulting in creating a source text having a length that is shorter than the original plaintext. This in turn will permit a shorter keystream. This ordering is not reversible, i.e., the encrypted stream E is not compressible if the keystream is random.

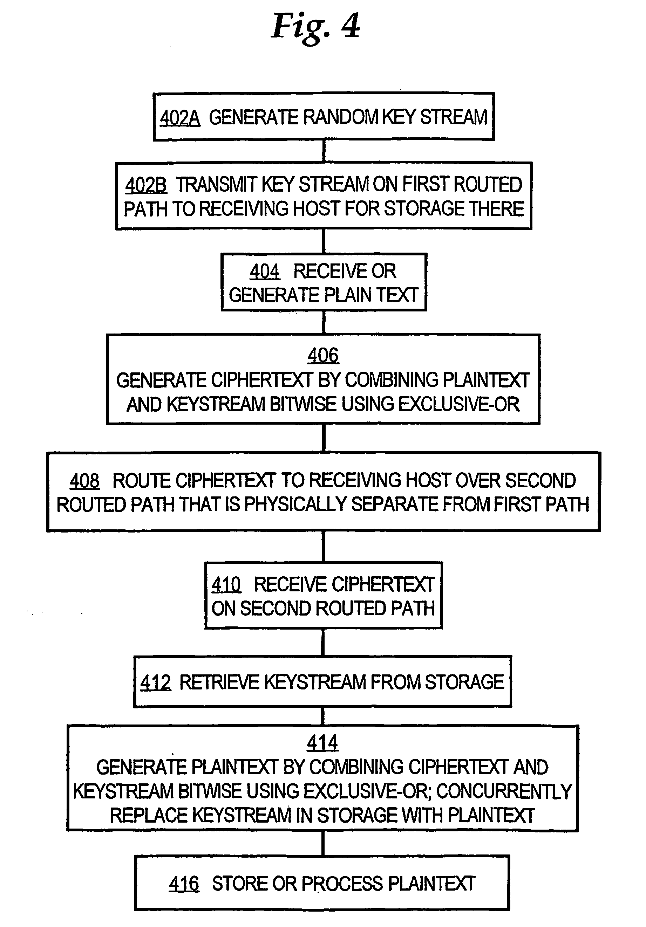

FIG. 4 is a flow diagram illustrating a method of securely transmitting and storing data in which keystream is pre-computed and cached, providing more efficient use of storage at the receiving host.

In block 402A, a segment of keystream is generated or pre-computed. In block 402B, the pre-computed segment is sent over channel 108B for storage at receiving host 120 in storage infrastructure element 122B. In block 404, plain text is received at the sending host from a programmatic source, or generated, or retrieved from storage. In block 406, ciphertext is generated by combining the plaintext and the keystream. In block 408, the ciphertext is routed to the receiving host over a second path that is different from the path over which the pre-computed keystream was sent.

In block 410, the ciphertext is received, e.g., at the receiving host, over the second path. In block 412 the keystream is retrieved from storage. In block 414, the ciphertext is decrypted, and the keystream is concurrently replaced in the storage with the resulting plaintext. In one embodiment, as the encrypted data arrives on channel 108A at decryption engine 126, the decryption engine reads sub-segments of keystream from storage infrastructure element 122B as needed, and immediately decrypts the ciphertext. Substantially simultaneously, the decrypted data D is stored in storage infrastructure element 122B and replaces the used segment of the key. In block 416, the plaintext is stored or processed as desired.

The approach of FIG. 4 reduces storage by eliminating a need to hold both the keystream and encrypted data until decryption. For shared data infrastructures, the separate streams can ensure greater security, because two separate organizations can hold each component without exposing either one.

In this approach, separate paths may be maintained within a data center that has SAN or NAS storage by routing the keystream on the data management network and the ciphertext on the storage network.

For applications with strong real-time constraints, the streams K and E are transported synchronously between the sending host and receiving host. In this alternative, decryption is applied at the receiving host without delay involved in recalling the key stream from storage. The synchronization between streams in a packet network can use the sequence numbers that form a part of the conventional packet header, such as those found in the Transport Control Protocol (TCP) header, or the synchronized streams can have special markers for alignment in case decryption faults occur without loss of security. In both the real-time and cached key versions described here, the key is consumed as part of the decryption step.

The storage of separate data streams and keystreams in first and second shared storage infrastructures, such as SANs, in the receiving host, means that a receiving party needs access to both of them to decrypt or legitimately encrypt data. Accordingly, in one embodiment, each of the storage infrastructures 122A, 122B are protected by separate authentication algorithms, such that compromise of either the encrypted data or the encryption key storage does not compromise the other.

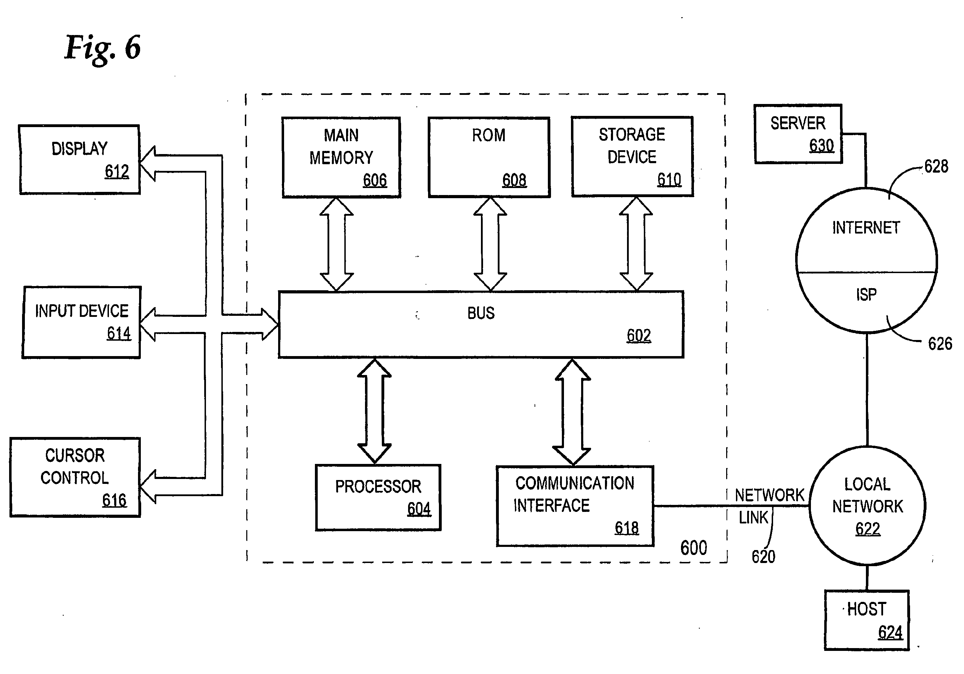

FIG. 6 is a block diagram that illustrates a computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory ("RAM") or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory ("ROM") 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube ("CRT"), for displaying information to a computer user. An input device 614, including alphanumeric and other keys, is coupled to bus 602 for communicating information and command selections to processor 604. Another type of user input device is cursor control 616, such as a mouse, trackball, stylus, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 for securely storing data by applying a one-time pad. According to one embodiment of the invention, securely storing data by applying a one-time pad is provided by computer system 600 in response to processor 604 executing one or more sequences of one or more instructions contained in main memory 606. Such instructions may be read into main memory 606 from another computer-readable medium, such as storage device 610. Execution of the sequences of instructions contained in main memory 606 causes processor 604 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector can receive the data carried in the infrared signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network ("ISDN") card or a modem to provide a data communication connection to a corresponding type of telephone line. As another example, communication interface 618 maybe a local area network ("LAN") card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider ("ISP") 626. ISP 626 in turn provides data communication services through the worldwide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are exemplary forms of carrier waves transporting the information.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618. In accordance with the invention, one such downloaded application provides for securely storing data by applying a one-time pad as described herein.

The received code may be executed by processor 604 as it is received, and/or stored in storage device 610, or other non-volatile storage for later execution. In this manner, computer system 600 may obtain application code in the form of a carrier wave.

Further, the present invention may be embodied on a computer system comprising a sending host connected to a receiving host through a communication network; means at the sending host for encrypting plaintext data, means at the sending host for generating a random keystream, means for transmitting said keystream and ciphertext on physically separate network paths, means at receiving host for decrypting ciphertext, and means at the receiving host for storing said keystream and ciphertext in physically separate shared storage infrastructures.

Embodiments have numerous practical uses and advantages. The approaches presented herein are simple to implement. The XOR operations for encryption and decryption may be implemented in hardware such as electronic integrated circuits. The encrypted data has theoretically perfect security, depending on the randomness of the keystream. As a result, to estimate the security of the data, only one parameter requires monitoring, namely the quality of the random number generator. Accordingly, the quality of protection is readily evaluated.

The use of a one-time-pad assures that the encryption is secure independent of any knowledge about the content type, or an estimate of the relative security required to protect it. Other cryptographic techniques reuse keys that are shorter than the data set. Especially for large data sets, it is important to change keys after the transport of some number of bits. Communication of a data set having a large size implies that a malicious attacker will have the advantage of a large data set to apply code-breaking tools. It is a challenge to estimate how often to distribute new keys. Key distribution frequency may be based upon estimates of growth in computational capability (e.g., as defined by Moore's Law) and the length of time that the data owner estimates it is necessary to keep the data protected, and assumptions about the security of the encryption algorithm used. A long trusted encryption code might be subject to a new algorithm that requires far fewer resources to decrypt. The desired protection time can be very difficult to determine; the easiest assumption is to estimate the time is indefinite, and use of a one-time-pad guarantees security over an indefinite time.

One application of the approaches herein relates to database replication, migration and disaster recovery. Databases are widely stored using SANs. It is important to be able to copy a database for fast read access, e.g., by replication. In general, replication is not required to occur in real time. Database migration is an optimization to decrease latency on subsets of data by placing data as close as possible to where it will be used; in general, database migration also may be carried out in other than real time, but this may be constrained by hard real-time delivery requirements, depending on the nature of the data in the database. Disaster recovery embraces the complete cycle of backup technologies to protect data and restore it. There are advantages to keeping the data encrypted at remote sites for some archival applications, and the approaches herein facilitate these advantages by requiring separate service providers to hold the keystream and the content, which are indistinguishable and appear as a random set of bits.

Distributed transactions are the hardest model for databases to support on the Internet because of transport latencies. If distributed transactions cannot be avoided, for example, through a clever combination of data migration using geographic cues, then the approaches herein offer minimal overhead.

Content delivery using multiple interfaces to the ISP is yet another application that benefits from the approaches herein. A content provider needs to be intimately teamed with a service provider managing a content delivery network. The content provider may want to track where all its content has been cached in the network, which is a database problem, and control its distribution. An ISP is likely to have multiple interfaces into the Internet for physically isolating the key and data streams. Another option is for the unencrypted content to be held at the service provider and encrypted for delivery at the caching server. The overhead at the service provider is mainly the cost of generating random keystream; however, the keystream can be generated in advance and pre-shipped to the customer so that a given keystream can be used on an arbitrary data steam selected by the consumer.

Content delivery to the endpoint consumer is yet another application. Many homes with DSL service also have cable access. Cable is beneficial for delivering high volume streams of data to the consumer, but it is a shared medium in that other people connected to the same cable head end can see the same traffic. Therefore, cable is not well suited for delivery of a customized stream to one specific customer and no other. Further, content providers want to encrypt data with minimum cost and processing power required at the customer. Accordingly, a content provider can use the approaches described herein to pre-cache a unique key stream using an encrypted tunnel over cable, since some of the long-term security requirements are less stringent; for example, the delivered data is ephemeral. The cached stream can be stored in a CPE device if there is a mass storage device on the network. In this model one is only taking advantage of the low processing requirements for the decryption.

In a variation of this approach, dual broadband interfaces to the same consumer are used. For example, the DSLAM to DSL modem path is unshared point-to-point and can be used to transport the key stream. For video delivery, this approach may be complicated by bandwidth constraints and may require partial local caching. The head end to cable modem path can be used to send the encrypted data stream. A set-top box can take the two streams and merge them for customer view.

Encrypted real-time multimedia delivery is another application of the approaches herein. The low latencies and simplicity of both the encryption and decryption methods when combined with the real-time variant of the key transmission can be applied to secure multimedia streams in general, and digital telephony in particular. The low computational requirements of the XOR operation means that devices which can manage two simultaneous equal bandwidth streams do not need additional cryptographic processing resources.

In yet another application, a content creator wishes to push a copy of a movie closer to the edge of a network for caching purposes . The movie must be encrypted to protect the intellectual property rights of the content creator, and to show good faith in protecting the copyright. Encrypting the movie content during transmission from the content creator to an edge network node of a service provider using the approaches herein, using appropriate MPLS labels to ensure a different path, provides a secure, highly cost effective, extremely efficient, and fast delivery method.

Further, using multiple separate paths in a network, as described herein, means that an attacker would have to monitor all possible paths between the endpoints, understand the streams and their timing and intelligently put them together, which is considered impractical. In addition, the approaches herein may be implemented using minimal software at each of the sender and receiver, and by providing sender and receiver with a network interface, yet the approaches remove key management complexity, many different attack types, and do not require complex security policy management.

**Claims**

1. A method for securely storing data by applying a one-time pad , the method comprising the computer implemented steps of:

    receiving a first data stream (102) comprising a keystream of truly randomly generated characters;
    receiving a second data stream (104) comprising ciphertext, wherein the first (102) and (104) data streams are received on two physically separate routed communication paths (108a, 108b), wherein the ciphertext comprises a source text that is encrypted by applying the keystream to the source text using an exclusive-OR operation;
    decrypting the ciphertext using the keystream, resulting in creating and storing decrypted data (124) that is equivalent to the source text, the method being

    **characterised by**;
    further comprising the steps of establishing the first and second separately routed communication paths (108a, 108b) in a network (110) for the keystream and ciphertext, respectively, by establishing first and second MPLS label paths (110) in nodes of the network, or by determining the first and second paths (108a, 108b) and forwarding packets of the keystream and ciphertext, wherein each such packet has an IP-STRICT-ROUTE-OPTION value set in the packet and includes one of the first and second paths (108a, 108b) as payload values.

2. The method according to Claim 1, wherein said step of decrypting the ciphertext (104) comprises combining the ciphertext (104) and keystream (102) bitwise using a Boolean exclusive-OR operation.

3. The method according to Claim 1, comprising the step of:

    receiving the keystream (102) in advance of receiving the second data stream (104);
    catching the keystream (102); and
    wherein said step of decrypting the ciphertext (104) comprises the steps of retrieving the keystream (102) from the cache for use in the exclusive-OR operation and overwriting the retrieved keystream (102) in the cache with said decrypted data (124), and preferably comprises the steps of receiving and storing the keystream (102) in a first storage device (122a) and receiving and storing the ciphertext in a second storage device (122b) that is separate from the first storage device (122a).

4. The method according to Claim 1, comprising the steps of::

generating the first data stream (102) using a true random value generator at a sending host (100);

generating a second data stream (104) comprising ciphertext by combining a source bitwise with the first data stream (102) using an exclusive-OR operation;

establishing a first routing path (108a) in a network (110) between the sending host (100) and a receiving host (120) for the first data stream (102);

establishing a second routing path (108b) in the network (110) for the second data stream (104), wherein the second routing path (108b) is entirely physically separate from the first routing path (108a); and

concurrently forwarding the first data stream (102) to the receiving host (120) over the first routing path (108a) and forwarding the second data stream (104) to the receiving host (120) over the second routing path (108b); and

preferably comprising the step of compressing the source text prior to combining the source text with the first data stream (102).

5. The method according to Claim 1, wherein the first data stream (102) and second data stream (104) are received synchronously, and wherein the step of decrypting is performed concurrently with receiving the first data stream (102) and second data stream (104).

6. The method according to Claim 1, wherein;

the first data stream (102) is generated based on a one-time pad;

the keystream is stored in a first shared storage infrastructure (122a); and

the data stream is stored in a second shared storage infrastructure (122b) that is separate from the first shared storage infrastructure (122a).

7. The method according to Claim 1, wherein the keystream is generated based on a one-time pad, and the source text is encrypted into ciphertext using the keystream, and wherein the keystream has a length equal to a length of the source text.

8. The method according to Claim 7, wherein the source text is encrypted by:

performing a Boolean exclusive-OR function bitwise on the source text and keystream to obtain the ciphertext.

9. The method according to Claim 7, wherein the step of forwarding ciphertext and the first data stream (102) on two separate network paths is performed by labelling a first data stream (102) carrying the keystream with a first MPLS label and labelling a second data stream (104) carrying the ciphertext (102) with a second MPLS label, or comprises establishing a first path (108a) by declaring a first strict route for a first stream (102) carrying the keystream and establishing a second path (108b) by declaring a second strict route for a second data stream (104) carrying the ciphertext.

10. The method according to Claim 1, wherein multimedia content is securely transmitted from a service provider to a consumer, the method comprising the computer implemented steps of:

retrieving the multimedia content, in plaintext form, from storage;

encrypting the multimedia content from plaintext form into the ciphertext by applying the keystream having a length equal to the length of the multimedia content bitwise using an exclusive-OR operation;

transmitting the ciphertext and the keystream to the consumer through a routed data network on two physically separate paths (108a, 108b), wherein the consumer may decrypt and view the multimedia content in plaintext form by applying the keystream to the ciphertext bitwise using an exclusive-OR operation.

11. The method according to Claim 10, further comprising the steps of pre-generating the keystream and communicating the keystream to the consumer at a first time earlier than a second time at which the ciphertext is transmitted to the consumer, wherein the consumer may decrypt and view the multimedia content in plaintext form by retrieving and applying the keystream to the ciphertext bitwise using an exclusive-OR operation.

12. A computer-readable medium carrying one or more sequences of instructions for securely storing data by applying a one-time pad, which instructions, when executed by one or more processors, cause the one or more processors to carry out the steps of Claims 1 to 11.

13. A computer system comprising:

a sending host (100) that is communicatively coupled to a receiving host (120) through a communications network (110);

means at the sending host (100) for encrypting plaintext data based on a truly randomly generated keystream;

means for transmitting said keystream and ciphertext on physically separate routed network paths (108a, 108b);

means at receiving host (120) for decrypting ciphertext;

means at the receiving host (120) for storing said keystream and ciphertext in physically separate shared storage infrastructures, and **characterised by**;

means for establishing first and second separately routed communications paths (108a, 108b) in a network (110) for the keystream and ciphertext, respectively, by establishing first and second MPLS label paths (110) in nodes of the network, or by determining the first and second paths (108a, 108b) and forwarding packets of the keystream and ciphertext, wherein each such packet has an IP-STRICT-ROUTE-OPTION value set in the packet and includes one of the first and second paths (108a, 108b) as payload values.

**Patentansprüche**

1. Verfahren zum sicheren Speichern von Daten unter Anwendung eines One-Time Pads, wobei das Verfahren die folgenden computerimplementierten Schritte umfasst:

   Empfangen eines ersten Datenstroms (102), der einen Schlüsselstrom (Keystream) von echt zufällig erzeugten Zeichen enthält;

   Empfangen eines zweiten Datenstroms (104), der Chiffretext enthält, wobei der erste (102) und der zweite (104) Datenstrom auf zwei physikalisch getrennt gerouteten Kommunikationspfaden (108a, 108b) empfangen werden, wobei der Chiffretext einen Quelltext enthält, der durch Anwenden des Schlüsselstroms auf den Quelltext unter Verwendung einer exklusiven ODER (exclusive OR)-Operation verschlüsselt wird;

   Entschlüsseln des Chiffretexts unter Verwendung des Schlüsselstroms, was zur Erzeugung und Speicherung von entschlüsselten Daten (124) führt, die äquivalent zu dem Quelltext sind, wobei das Verfahren **dadurch gekennzeichnet ist, dass**

   es des Weiteren die Schritte des Erstellens der ersten und der zweiten getrennt gerouteten Kommunikationspfade (108a, 108b) in einem Netzwerk (110) für den Schlüsselstrom und den Chiffretext umfasst, jeweils durch Erstellen erster und zweiter MPLS-Label-Pfade (110) in Knoten des Netzwerks, oder durch Bestimmen der ersten und zweiten Pfade (108a, 108b) und Weiterleiten von Paketen des Schlüsselstroms und des Chiffretexts, wobei jedes derartige Paket einen IP-STRIKTE-ROUTE-OPTION (IP-STRICT-ROUTE-OPTION) Wert in dem Paket eingestellt hat und einen der ersten und zweiten Pfade (108a, 108b) als Nutzdaten (Payload)-Werte aufweist.

2. Verfahren nach Anspruch 1, wobei der Schritt des Entschlüsselns des Chiffre-texts (104) das bitweise Kombinieren des Chiffretexts (104) und des Schlüsselstroms (102) unter Verwendung einer Booleschen exklusiven ODER (exclusive OR)-Operation umfasst.

3. Verfahren nach Anspruch 1, das die folgenden Schritte umfasst:

   Empfangen des Schlüsselstroms (102) vor dem Empfangen des zweiten Datenstroms (104);

   "Festhalten" des Schlüsselstroms (102); und

   wobei der Schritt des Entschlüsselns des Chiffretexts (104) die Schritte des Abrufens des Schlüsselstroms (102) aus dem Cache zur Verwendung in der exklusiven ODER (exclusive OR)-Operation und das Überschreiben des abgerufenen Schlüsselstroms (102) in dem Cache mit den entschlüsselten Daten (124) umfasst, und vorzugsweise die Schritte des Empfangens und Speicherns des Schlüsselstroms (102) in einer ersten Speichervorrichtung (122a) und das Empfangen und Speichern des Chiffretexts in einer zweiten Speichervorrichtung (122b) umfasst, die von der ersten Speichervorrichtung (122a) getrennt ist

4. Verfahren nach Anspruch 1, das die folgenden Schritte umfasst:

   Erzeugen des ersten Datenstroms (102) unter Verwendung eines echten Zufallswert-Generators bei einem Sendehost (100);

   Erzeugen eines zweiten Datenstroms (104), der Chiffretext enthält, durch bitweises Kombinieren einer Quelle mit dem ersten Datenstrom (102) unter Verwendung einer exklusiven ODER (exclusive OR)-Operation;

   Erstellen eines ersten Routing-Pfads (108a) in einem Netzwerk (110) zwischen dem Sendehost (100) und einem Empfangshost (120) für den ersten Datenstrom (102);
Erstellen eines zweiten Routing-Pfads (108b) in dem Netzwerk für den zweiten Datenstrom (104), wobei der zweite Routing-Pfad (108b) von dem ersten Routing-Pfad (108a) vollständig physikalisch getrennt ist; und zeitgleiches Weiterleiten des ersten Datenstroms (102) an den Empfangshost (120) über den ersten Routing-Pfad (108a) und Weiterleiten des zweiten Datenstroms (104) an den Empfangshost (120) über den zweiten Routing-Pfad (108b); und
vorzugsweise den Schritt des Komprimierens des Quelltexts vor dem Kombinieren des Quelltexts mit dem ersten Datenstrom (102).

5. Verfahren nach Anspruch 1, wobei der erste Datenstrom (102) und der zweite Datenstrom (104) synchron empfangen werden, und wobei der Schritt des Entschlüsselns zeitgleich mit dem Empfangen des ersten Datenstroms (102) und des zweiten Datenstroms (104) durchgeführt wird.

6. Verfahren nach Anspruch 1, wobei:

der erste Datenstrom (102) auf der Grundlage eines One-Time Pads erzeugt wird;
der Schlüsselstrom in einer ersten gemeinsamen Speicher-Infrastruktur (122a) gespeichert wird; und
der Datenstrom in einer zweiten gemeinsamen Speicher-Infrastruktur (122b) gespeichert wird, die von der ersten gemeinsamen Speicher-Infrastruktur (122a) getrennt ist.

7. Verfahren nach Anspruch 1, wobei der Schlüsselstrom auf der Grundlage eines One-Time Pads erzeugt wird und der Quelltext unter Verwendung des Schlüsselstroms in Chiffretext verschlüsselt wird, und wobei der Schlüsselstrom eine Länge aufweist, die gleich der Länge des Quelltexts ist.

8. Verfahren nach Anspruch 7, wobei der Quelltext verschlüsselt wird durch:

Durchführen einer Booleschen exklusiven ODER (exclusive OR)-Operation bitweise für den Quelltext und den Schlüsselstrom, um den Chiffretext zu erhalten.

9. Verfahren nach Anspruch 7, wobei der Schritt des Weiterleitens des Chiffretexts und des ersten Datenstroms (102) auf zwei getrennten Netzwerkpfaden durchgeführt wird durch Kennzeichnen eines ersten Datenstroms (102), der den Schlüsselstrom trägt, mit einem ersten MPLS-Label und durch Kennzeichnen eines zweiten Datenstroms (104), der den Chiffretext (102) trägt, mit einem zweiten MPLS-Label, oder das Erstellen eines ersten Pfads (108a) durch Erklären einer ersten strikten Route für einen ersten Datenstrom (102), der den Schlüsselstrom trägt, und das Erstellen eines zweiten Pfads (1 08b) durch Erklären einer zweiten strikten Route für einen zweiten Datenstrom (104), der den Chiffretext enthält, umfasst.

10. Verfahren nach Anspruch 1, wobei Multimedia-Inhalt sicher von einem Service Provider zu einem Verbraucher übertragen wird, wobei das Verfahren die folgenden computerimplementierten Schritte umfasst:

Abrufen des Multimedia-Inhalts in Klartext-Form aus dem Speicher; Verschlüssen des Multimedia-Inhalts von der Klartext-Form in Chiffretext unter Anwendung des Schlüsselstroms, der eine Länge aufweist, die gleich der Länge des Multimedia-Inhalts ist, indem bitweise eine exklusive ODER (exclusive OR)-Operation verwendet wird;
Übertragen des Chiffretexts und des Schlüsselstroms an den Verbraucher über ein geroutetes Datennetzwerk auf zwei physikalisch getrennten Pfaden (108a, 108b), wobei der Verbraucher den Multimedia-Inhalt entschlüsseln und in Klartext-Form ansehen kann, indem er den Schlüsselstrom auf den Chiffretext unter bitweiser Verwendung einer exklusiven ODER (exclusive OR)-Operation anwendet.

11. Verfahren nach Anspruch 10, das des Weitem die Schritte des Vorerzeugens des Schlüsselstroms und des Kommunizierens des Schlüsselstroms an den Verbraucher zu einer ersten Zeit umfasst, die vor einer zweiten Zeit liegt, zu der der Chiffretext an den Verbraucher übermittelt wird, wobei der Verbraucher den Multimedia-Inhalt entschlüsseln und in Klartext-Form ansehen kann, indem er den Schlüsselstrom abruft und ihn auf den Chiffretext unter bitweiser Verwendung einer exklusiven ODER (exclusive OR)-Operation anwendet.

12. Computerlesbares Medium, das eine oder mehrere Abfolgen von Befehlen trägt, um Daten unter Anwendung eines One-Time Pads sicher zu speichern, wobei die Befehle, wenn sie von einem oder mehreren Prozessoren ausgeführt werden, dazu führen, dass der eine oder die mehreren Prozessoren die Schritte nach den Ansprüchen 1 bis 11 ausführt/ausführen.

**13.** Computersystem mit:

einem Sendehost (100), der über ein Kommunikationsnetzwerk kommunikativ mit einem Empfangshost (120) gekoppelt ist;
einer Einrichtung an dem Sendehost (100) zum Verschlüsseln von Klartext auf der Grundlage eines echt zufällig erzeugten Schlüsselstroms;
einer Einrichtung zum Übertragen des Schlüsselstroms und des Chiffretexts auf physikalisch getrennt gerouteten Netzwerk-Pfaden (108a, 108b);
einer Einrichtung an dem Empfangshost (120) zum Entschlüsseln von Chiffretext;
einer Einrichtung an dem Empfangshost (120) zu Speichern des Schlüsselstroms und des Chiffretexts in physikalisch getrennten gemeinsamen Speicher-Infrastrukturen, und **gekennzeichnet durch**:

eine Einrichtung zum Erstellen erster und zweiter getrennt gerouteter Kommunikationspfade (108a, 108b) in einem Netzwerk (110) für den Schlüsselstrom und den Chiffretext, jeweils **durch** Erstellen erster und zweiter MPLS-Label-Pfade (101) in Knoten des Netzwerks, oder **durch** Bestimmen der ersten und zweiten Pfade (108a, 108b) und Weiterleiten von Paketen des Schlüsselstroms und des Chiffretexts, wobei jedes derartige Paket einen IP-STRIKTE-ROUTE-OPTION (IP-STRICT-ROUTE-OPTION) Wert in dem Paket eingestellt hat und einen der ersten und zweiten Pfade (108a, 108b) als Nutzdaten (Payload)-Werte aufweist.

## Revendications

**1.** Procédé de stockage sécurisé de données par application d'un masque à usage unique, le procédé comprenant les étapes informatisées de :

réception d'une première séquence de données (102) comprenant une séquence clé de caractères générés de manière réellement aléatoire ;
réception d'une deuxième séquence de données (104) comprenant un cryptogramme, dans lequel la première (102) et la deuxième (104) séquence de données sont placées sur deux voies de transmission acheminées physiquement séparément (108a, 108b), dans lequel le cryptogramme comprend un texte source qui est crypté en appliquant la séquence clé au texte source à l'aide d'une opération OU exclusif ;
décryptage du cryptogramme à l'aide de la séquence clé, ce qui entraîne la création et le stockage de données décryptées (124) qui sont équivalentes au texte source, le procédé étant **caractérisé en ce qu'**il comprend, en outre, les étapes d'installation de la première et la deuxième voie de transmission acheminée séparément (108a, 108b) dans un réseau (110) pour la séquence de données et le cryptogramme, respectivement, en installant une première et une deuxième voie d'étiquette MPLS (110) dans des noeuds du réseau, ou en déterminant la première et la deuxième voie (108a, 108b) et en transmettant des paquets de la séquence clé et du cryptogramme, dans lequel chacun de ces paquets a une valeur IP-STRICT-ROUTE-OPTION fixée dans le paquet et comprend l'une de la première et de la deuxième voie de transmission (108a, 108b) comme valeurs de charge utile.

**2.** Procédé selon la revendication 1, dans lequel ladite étape de décryptage du cryptogramme (104) comprend la combinaison binaire du cryptogramme (104) et de la séquence clé (102) à l'aide d'une opération OU exclusif de Boole.

**3.** Procédé selon la revendication 1, comprenant l'étape de :

réception de la séquence clé (102) avant la réception de la deuxième séquence de données (104) ;
saisie de la séquence clé (102) ; et
dans lequel ladite étape de décryptage du cryptogramme (104) comprend les étapes de récupération de la séquence clé (102) dans l'antémémoire qui est utilisée pour l'opération OU exclusif et de réinscription de la séquence clé récupérée (102) dans l'antémémoire avec lesdites données décryptées (124), et comprend, de préférence, les étapes de réception et de stockage de la séquence clé (102) dans un premier dispositif de stockage (122a) et de réception et de stockage du cryptogramme dans un deuxième dispositif de stockage (122b) qui est séparé du premier dispositif de stockage (122a).

**4.** Procédé selon la revendication 1, comprenant les étapes de :

génération d'une première séquence de données (102) à l'aide d'un générateur de valeurs réellement aléatoires au niveau d'un ordinateur hôte expéditeur (100) ;

génération d'une deuxième séquence de données (104) comprenant le cryptogramme par la combinaison binaire d'une source avec la première séquence de données (102) à l'aide d'une opération OU exclusif ;

installation d'une première voie d'acheminement (108a) dans un réseau (110) entre l'ordinateur hôte expéditeur (100) et un ordinateur hôte récepteur (120) pour la première séquence de données (102) ;

installation d'une deuxième voie d'acheminement (108b) dans le réseau (110) pour la deuxième séquence de données (104), dans lequel la deuxième voie d'acheminement (108b) est complètement séparée physiquement de la première voie d'acheminement (108a) ; et

transmission concomitante de la première séquence de données (102) à l'ordinateur hôte récepteur (120) par l'intermédiaire de la première voie d'acheminement (108a) et transmission de la deuxième séquence de données (104) à l'ordinateur hôte récepteur (120) par l'intermédiaire de la deuxième voie d'acheminement (108b) ; et comprenant, de préférence, l'étape de compression du texte source avant la combinaison du texte source avec la première séquence de données (102).

5. Procédé selon la revendication 1, dans lequel la première séquence de données (102) et la deuxième séquence de données (104) sont reçues de manière synchrone et dans lequel l'étape de décryptage est réalisée en même temps que la réception de la première séquence de données (102) et de la deuxième séquence de données (104).

6. Procédé selon la revendication 1, dans lequel :

la première séquence de données (102) est générée sur la base d'un masque à usage unique ;
la séquence clé est stockée dans une première infrastructure de stockage partagée (122a) ; et
la séquence de données est stockée dans une deuxième infrastructure de stockage partagée (122b) qui est séparée de la première infrastructure de stockage partagée (122a).

7. Procédé selon la revendication 1, dans lequel la séquence clé est générée sur la base d'un masque à usage unique et le texte source est crypté en un cryptogramme à l'aide de la séquence clé, et dans lequel la séquence clé a une longueur égale à une longueur du texte source.

8. Procédé selon la revendication 7, dans lequel le texte source est crypté en :

réalisant une opération OU exclusif binaire de Boole avec le texte source et la séquence clé pour obtenir le cryptogramme.

9. Procédé selon la revendication 7, dans lequel l'étape de transmission du cryptogramme et de la première séquence de données (102) par l'intermédiaire de deux voies de réseau séparées est réalisée en étiquetant une première séquence de données (102) portant la séquence clé avec une première étiquette MPLS et en étiquetant une deuxième séquence de données (104) portant le cryptogramme (102) avec une deuxième étiquette MPLS, ou comprend l'installation d'une première voie (108a) en déclarant un premier chemin strict pour une première séquence de données (102) portant la séquence clé et l'installation d'une deuxième voie (108b) en déclarant un deuxième chemin strict pour une deuxième séquence de données (104) portant le cryptogramme.

10. Procédé selon la revendication 1, dans lequel le contenu multimédia est transmis de manière sécurisée par un fournisseur d'accès à un consommateur, le procédé comprenant les étapes informatisées de :

récupération du contenu multimédia sous forme de texte clair à partir du dispositif de stockage ;
cryptage du contenu multimédia de la forme de texte clair en cryptogramme en appliquant de manière binaire la séquence clé ayant une longueur égale à la longueur du contenu multimédia à l'aide d'une opération OU exclusif ;
transmission du cryptogramme et de la séquence clé au consommateur par l'intermédiaire d'un réseau de données acheminées sur deux voies de transmission physiquement séparées (108a, 108b), dans lequel le consommateur peut décrypter et voir le contenu multimédia sous forme de texte clair en appliquant de manière binaire la séquence clé au cryptogramme à l'aide d'une opération OU exclusif.

11. Procédé selon la revendication 10, comprenant, en outre, les étapes de génération préalable de la séquence clé et de communication de la séquence clé au consommateur à un premier moment précédent un deuxième moment auquel le cryptogramme est transmis au consommateur, dans lequel le consommateur peut décrypter et voir le contenu multimédia sous forme de texte clair en récupérant et en appliquant de manière binaire la séquence clé au cryptogramme à l'aide d'une opération OU exclusif.

**12.** Support lisible par ordinateur portant une ou plusieurs séquences d'instructions pour le stockage sécurisé de données par application d'un masque à usage unique, lesquelles instructions, lorsqu'elles sont exécutées par un ou plusieurs processeurs, amènent le un ou plusieurs processeurs à réaliser les étapes des revendications 1 à 11.

**13.** Système informatique comprenant :

un ordinateur hôte expéditeur (100) qui est couplé en communication avec un ordinateur hôte récepteur (120) par l'intermédiaire d'un réseau de communication (110) ;
des moyens au niveau de l'ordinateur hôte expéditeur (100) pour crypter des données en texte clair sur la base d'une séquence clé générée de manière réellement aléatoire ;
des moyens pour transmettre ladite séquence clé et ledit cryptogramme sur des voies de transmission acheminées physiquement séparément (108a, 108b) ;
des moyens au niveau de l'ordinateur hôte récepteur (120) pour décrypter le cryptogramme ;
des moyens au niveau de l'ordinateur hôte récepteur (120) pour mémoriser ladite séquence clé et ledit cryptogramme dans des infrastructures de stockage partagées physiquement séparées, et **caractérisé par** :

des moyens pour établir une première et une deuxième voie de transmission acheminées séparément (108a, 108b) dans un réseau (110) pour la séquence clé et le cryptogramme, respectivement, en installant une première et une deuxième voie d'étiquette MPLS (110) dans des noeuds du réseau, ou en déterminant la première et la deuxième voie (108a, 108b) et en transmettant des paquets de la séquence clé et du cryptogramme, dans lequel chacun de ces paquets a une valeur IP-STRICT-ROUTE-OPTION fixée dans le paquet et comprend l'une de la première et de la deuxième voie de transmission (108a, 108b) comme valeurs de charge utile.

*Fig. 1*

# Fig. 2

202 GENERATE (TRULY RANDOM) KEY STREAM

202 RECEIVE OR
GENERATE PLAIN TEXT

204
GENERATE CIPHERTEXT BY COMBINING PLAINTEXT
AND KEYSTREAM BITWISE USING EXCLUSIVE-OR

206 ROUTE KEY STREAM AND CIPHERTEXT TO RECEIVING HOST
OVER TWO PHYSICALLY SEPARATE COMMUNICATION CHANNELS

# *Fig. 3*

**310** RECEIVE KEYSTREAM ON FROM FIRST ROUTED PATH

**312** RECEIVE CIPHERTEXT ON SECOND ROUTED PATH

**314**
GENERATE PLAINTEXT BY COMBINING CIPHERTEXT AND KEYSTREAM BITWISE USING EXCLUSIVE-OR

**316** STORE OR PROCESS PLAINTEXT

# *Fig. 4*

402A GENERATE RANDOM KEY STREAM

402B TRANSMIT KEY STREAM ON FIRST ROUTED PATH TO RECEIVING HOST FOR STORAGE THERE

404 RECEIVE OR GENERATE PLAIN TEXT

406
GENERATE CIPHERTEXT BY COMBINING PLAINTEXT AND KEYSTREAM BITWISE USING EXCLUSIVE-OR

408 ROUTE CIPHERTEXT TO RECEIVING HOST OVER SECOND ROUTED PATH THAT IS PHYSICALLY SEPARATE FROM FIRST PATH

410 RECEIVE CIPHERTEXT ON SECOND ROUTED PATH

412 RETRIEVE KEYSTREAM FROM STORAGE

414
GENERATE PLAINTEXT BY COMBINING CIPHERTEXT AND KEYSTREAM BITWISE USING EXCLUSIVE-OR; CONCURRENTLY REPLACE KEYSTREAM IN STORAGE WITH PLAINTEXT

416 STORE OR PROCESS PLAINTEXT

# Fig. 5

502 ESTABLISH FIRST AND SECOND PHYSICALLY
SEPARATE ROUTED PATHS IN NETWORK

504A
PERFORM MPLS PATH SETUP FOR
FIRST AND SECOND PATHS

504B
DETERMINE FIRST AND
SECOND HOP-BY-HOP
ROUTED PATHS

506
GENERATE KEYSTREAM
AND CIPHERTEXT

508A APPLY FIRST PATH LABEL
TO KEYSTREAM PACKETS IN
PACKET HEADER; APPLY SECOND
PATH LABEL TO CIPHERTEXT
PACKETS IN PACKET HEADER

508B SET
IP-STRICT-ROUTE-OPTION IN
PACKETS OF KEYSTREAM
AND CIPHERTEXT; PROVIDE
FIRST AND SECOND PATHS
AS PAYLOADS IN PACKET
HEADER

510
FORWARD PACKETS IN
NETWORK TO RECEIVING
HOST

## Fig. 6

EP 1 470 660 B1